Europäisches Patentamt

European Patent Office

Office européen des brevets

(19)

(11) Numéro de publication: **0 040 115**
**B1**

(12) **FASCICULE DE BREVET EUROPEEN**

(45) Date de publication du fascicule du brevet:
**23.03.83**

(51) Int. Cl.³: **H 02 K 15/095**

(21) Numéro de dépôt: **81400601.1**

(22) Date de dépôt: **15.04.81**

(54) **Procédé pour fabriquer un stator de machine dynamo-électrique, ébauche s'y rapportant, et stator obtenu par ce procédé.**

(30) Priorité: **14.05.80 FR 8010822**

(43) Date de publication de la demande:
**18.11.81 Bulletin 81/46**

(45) Mention de la délivrance du brevet:
**23.03.83 Bulletin 83/12**

(84) Etats contractants désignés:
**CH DE GB IT LI NL**

(56) Documents cités:
**DE-A-2 849 212**
**FR-A-2 055 099**

(73) Titulaire: **SEB S.A. Société Anonyme française,**
**F-21260 Selongey (FR)**

(72) Inventeur: **Martin, Guy, 43, rue des Palombes,**
**F-65270 Juillan (FR)**

(74) Mandataire: **Bouju, André, 38 Avenue de la Grande**
**Armée, F-75017 Paris (FR)**

## Procédé pour fabriquer un stator de machine dynamo-électrique, ébauche s'y rapportant, et stator obtenu par ce procédé

La présente invention concerne un procédé de fabrication d'un stator de machine dynamo-électrique, notamment de petit moteur électrique à circuit magnétique fermé, du genre couramment appelé moteur universel.

L'invention concerne également une ébauche de stator permettant d'appliquer ce procédé, et un stator obtenu par ce procédé.

Les stators visés ici présentent généralement un certain nombre d'épanouissements polaires dirigés vers l'intérieur de l'anneau formant circuit magnétique. Autour du pied de chaque épanouissement est bobiné un enroulement statorique retenu prisonnier dans les encoches ainsi formées entre l'anneau et l'épanouissement. L'enroulement est en général isolé du stator à l'aide de papier isolant. En outre, aux deux extrémités axiales, l'enroulement est éloigné du rotor et retenu vers l'extérieur par divers moyens tels que, notamment, une languette qui prolonge axialement l'épanouissement polaire.

De tels enroulements peuvent facilement être bobinés mécaniquement à l'aide d'une aiguille en T introduite suivant l'axe de la machine et animée d'un mouvement rotatif alternatif combiné avec un mouvement de translation axiale.

En vue de faire passer, à chaque demi-tour, le fil derrière les languettes de retenue, il est prévu d'installer provisoirement un guide-fil dans le prolongement des languettes pour obliger le fil à passer derrière. Or, la pose et la dépose de ces guide-fils à la main est une opération longue et coûteuse eu égard à la rapidité des machines à bobiner actuelles.

La présente invention vise à réaliser un procédé de fabrication qui permette de s'affranchir de cette sujétion.

Suivant un premier aspect de l'invention, celle-ci vise un procédé pour fabriquer un stator de machine dynamo-électrique. Ce stator comprend un noyau magnétique au moins partiellement isolé par un revêtement plastique et présentant un certain nombre d'épanouissements polaires qui ménagent des encoches pour retenir des enroulements statoriques en coopération avec des languettes de retenue qui prolongent axialement ces épanouissements. Ce procédé est caractérisé en ce qu'on effectue les opérations suivantes:

a) on fait venir de moulage avec le revêtement plastique des moyens profilés de guidage polongeant axialement les languettes et disposés pour guider le fil issu d'une aiguille de bobinage vers les encoches destinées à le recevoir, ces moyens profilés étant réunis aux languettes par des zones amincies formant zones de rupture préférentielle;

b) on effectue le bobinage et l'on arrête les extrémités du fil;

c) on enlève les moyens profilés de guidage par rupture des zones amincies.

De cette manière, on supprime entièrement l'opération de pose du guide-fil, et l'on simplifie considérablement l'opération de dépose, qui se ramène à une simple rupture.

Suivant un second aspect de l'invention, celle-ci vise une ébauche de stator de machine dynamo-électrique, prévue pour appliquer le procédé de fabrication précité. Cette ébauche comprend un noyau magnétique au moins partiellement isolé par un revêtement plastique et présentant un certain nombre d'épanouissements polaires qui ménagent des encoches pour retenir des enroulements statoriques en coopération avec des languettes de retenue qui prolongent axialement ces épanouissements. Elle est caractérisée en ce que les languettes sont prolongées axialement sur l'ébauche par des moyens profilés faisant corps avec elles pour le guidage du fil des enroulements lors du bobinage de ceux-ci, ces moyens de guidage étant reliés auxdites languettes par des zones amincies constituant des zones de rupture préférentielle.

Suivant une réalisation préférée de l'invention, lesdits moyens de guidage du fil des enroulements comprennent des saillies de guidage effilées vers l'extérieur du stator.

L'aiguille dépose le fil vers la pointe de la saillie, puis le fil glisse le long de la surface généralement conique de la saillie pour être aminé dans l'encouche.

Suivant une réalisation préférée de l'invention, lesdites saillies de guidage sont évidées et comportent chacune plusieurs cloisons convergeant vers l'extérieur et dont les bords constituent approximativement des génératrices d'un cône idéal enveloppant la saillie.

Cette forme de réalisation, exigeant peu de matière, est particulièrement économique.

Suivant une réalisation perfectionnée de l'invention, les languettes de retenue présentent, au voisinage de leur jonction avec les saillies de guidage, des bordures s'étendant radialement pour contribuer à retenir les enroulements, s'ils avaient tendance à déborder de l'extrémité des languettes.

De façon avantageuse, les bordures des languettes sont situées sensiblement dans des plans perpendiculaires à l'axe de rotation de la machine.

Ces bordures peuvent ainsi servir de support stable au stator après enlèvement des saillies de guidage, en permettant de le poser, avec l'axe vertical, sur un plan de travail ou de rangement sans aucun risque de détérioration des enroulements.

D'autres particularités et avantages de l'invention ressortiront encore de la description détaillée qui va suivre.

Aux dessins annexés, donnés à titre d'exemple non limitatif:

— la figure 1 est une vue en perspective d'une ébauche de stator conforme à l'invention;
— la figure 2 est une vue en coupe axiale de l'ébauche, suivant II-II de la figure 1;
— la figure 3 est une vue en plan partielle de l'ébauche suivant III-III de la figure 2;
— les figures 4 et 5 sont des vues en coupe respectivement suivant IV-IV et V-V de la figure 3;
— la figure 6 est une vue en perspective d'un stator terminé;
— la figure 7 est une vue en élévation du stator.

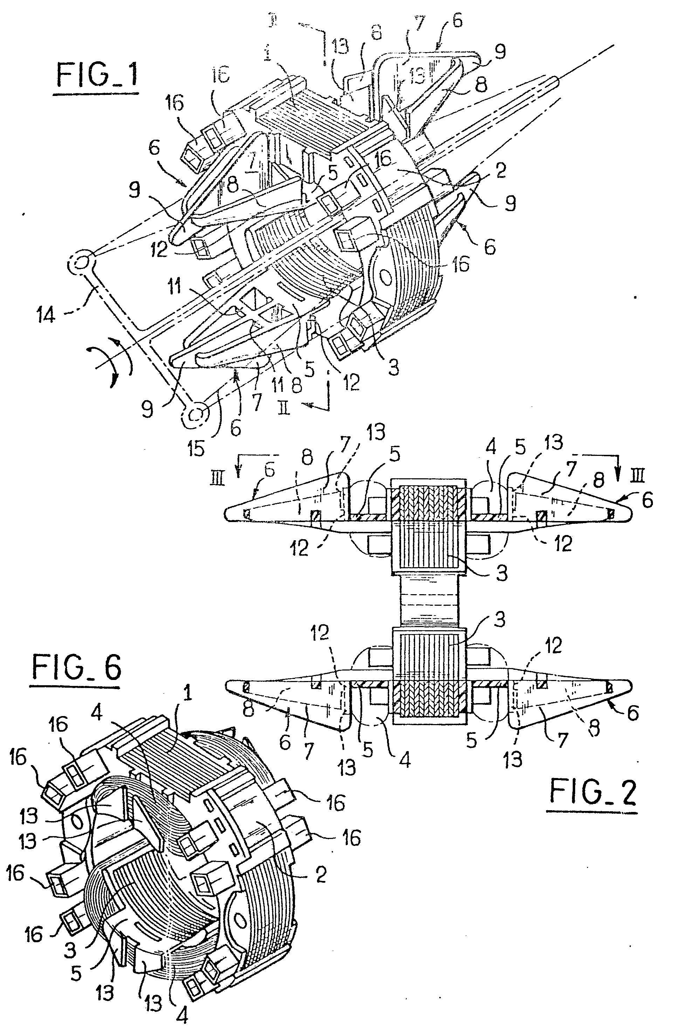

En référence aux figures 1 à 7, l'ébauche de stator comprend un noyau magnétique 1 annulaire à structure feuilletée surmoulé dans un revêtement plastique 2. Ce noyau présente deux épanouissements polaires 3 qui ménagent des encoches pour recevoir des enroulements statoriques 4 (figure 6). Des languettes de retenue 5 prolongent axialement les épanouissements 3 et contribuent à retenir les enroulements 4.

Des saillies effilées 6 prolongent elles-mêmes axialement les languettes 5 et forment un ensemble monobloc avec le stator, obtenu au cours du surmoulage précité. Chaque saillie se compose d'une cloison centrale 7 et de deux cloisons latérales 8 qui convergent vers l'extérieur du stator et dont la hauteur diminue progressivement vers l'extérieur. De cette manière, les saillies 6 constituent des organes effilés vers l'extérieur, les sommets des cloisons s'inscrivant sensiblement dans un demi-cône.

Les trois cloisons sont rénuies sensiblement à l'extrémité effilée 9 de la saillie 6, et elles sont en outre maintenues assemblées par des entretoises 11 au voisinage de la base du cône.

Les trois cloisons forment monobloc avec la languette 5 correspondante par l'intermédiaire de trois zones amincies 12 qui forment zone de rupture préférentielle quand on tente de séparer les saillies de l'ensemble par flexion et rupture.

Des bordures 13 s'étendent radialement à l'extrémité extérieure de chaque languette 5 pour former, avec lesdites languettes et le noyau annulaire 1, au total quatre encoches en U où viennent s'insérer les enroulements 4 (figure 2). Ces bordures sont situées juste derrière les zones amincies 12, de sorte qu'elles subsistent après enlèvement des saillies 6 (figure 6). Ces bordures présentent un périmètre qui s'inscrit à l'intérieur du cône circonscrit aux cloisons 7, 8. Elles sont situées respectivement dans deux plans perpendiculaires à l'axe du stator, de sorte qu'elles peuvent servir d'appui stable du stator sur un plan une fois les saillies 6 retirées.

Pour mettre en oeuvre l'invention, on réalise une ébauche telle que représentée aux figures 1 à 5, c'est-à-dire comprenant, venues de moulage, les quatre saillies 6 prolongeant axialement les deux épanouissements polaires.

On réalise le bobinage des enroulements de façon connue en soi au moyen d'une aiguille 14 en T (figure 1) animée d'un mouvement de rotation alternatif dont les alternances sont séparées par des mouvements de translation axiale.

Sur la figure 1, l'aiguille fait passer le fil 15 derrière la saillie 6, et ce fil glisse le long de cette saillie pour se retrouver dans l'encoche en U, derrière les bordures 13. Après un demi-tour, l'aiguille est déplacée axialement jusqu'à sortir de l'autre côté du rotor, puis effectue un demi-tour dans l'autre sens avant d'être à nouveau déplacée axialement pour reprendre la position de la figure 1 où elle effectue encore un demi-tour.

Une fois le bobinage terminé, on arrête le fil dans des borniers 16 et l'on brise les saillies 6 par rupture des zones amincies 12.

L'intervention des saillies 6 ne nécessite donc pratiquement aucun temps de main-d'oeuvre, ce qui, au regard de la rapidité de bobinage des machines actuelles, réduit considérablement le coût de fabrication du rotor.

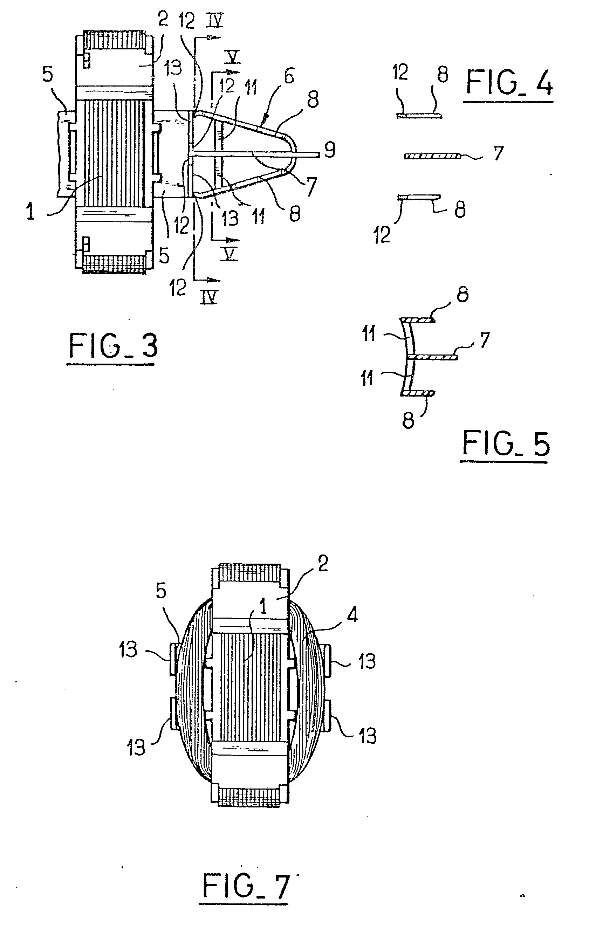

En outre, après enlèvement des saillies, les bordures 13 constituent pour le rotor des supports parfaitement stables et qui, en outre, comme le montre la figure 7, protègent efficacement les enroulements.

Bien entendu, l'invention n'est pas limitée à l'exemple décrit, mais couvre toute variante, notamment dans la structure des saillies 6 qui doivent seulement réaliser la condition d'être généralement effilées.

**Revendications**

1. Procédé pour fabriquer un stator de machine dynamo-électrique, ledit stator comprenant un noyau magnétique (1) au moins partiellement isolé par un revêtement plastique (2) et présentant un certain nombre d'épanouissements polaires (3) qui ménagent des encoches pour retenir des enroulements statoriques (4) en coopération avec des languettes de retenue (5) qui prolongent axialement ces épanouissements, caractérisé en ce qu'on effectue les opérations suivantes:

a) on fait venir de moulage avec le revêtement plastique des moyens profilés de guidage (6) prolongeant axialement les languettes (5) et disposés pour guider le fil (15) issu d'une aiguille de bobinage (14) vers les encoches destinées à le recevoir, ces moyens profilés étant réunis aux languettes (5) par des zones amincies (12) formant zones de rupture préférentielle;

b) on effectue le bobinage et l'on arrête les extrémités du fil;

c) on enlève les moyens profilés de guidage (6) par rupture des zones amincies (12).

2. Ebauche de stator de machine dynamo-électrique, pour appliquer un procédé de fabrication conforme à la revendication 1, comprenant un noyau magnétique (1) au moins partiellement isolé par un revêtement plastique (2) et présentant un certain nombre d'épanouissements polaires (3) qui ménagent des encoches pour retenir des enroulements statoriques (4) en coopération avec des languettes de retenue (5) qui prolongent axialement ces épanouissements, caractérisée en ce que les languettes sont prolongées axialement sur l'ébauche par des moyens profilés (6) faisant corps avec elles pour le guidage du fil (15) des enroulements (4) lors du bobinage de ceux-ci, ces moyens de guidage étant reliés auxdites languettes (5) par des zones amincies (12) constituant des zones de rupture préférentielle.

3. Ebauche conforme à la revendication 2, caractérisée en ce que lesdits moyens de guidage (6) du fil (15) des enroulements (4) comprennent des saillies de guidage effilées vers l'extérieur du stator.

4. Ebauche conforme à la revendication 3, caractérisée en ce que lesdites saillies de guidage (6) sont évidées et comportent chacune plusieurs cloisons (7, 8) convergeant vers l'extérieur et dont les bords constituent approximativement des génératrices d'un cône idéal enveloppant la saillie (6).

5. Ebauche conforme à l'une des revendications 3 ou 4, caractérisée en ce que les languettes de retenue (5) présentent, au voisinage de leur jonction avec les saillies de guidage (6), des bordures (13) s'étendant radialement pour contribuer à retenir les enroulements (4).

6. Ebauche conforme à la revendication 5, caractérisée en ce que les bordures (13) des languettes (5) sont situées sensiblement dans des plans perpendiculaires à l'axe de rotation de la machine.

7. Stator de machine dynamo-électrique provenant d'une ébauche conforme à l'une des revendications 2 à 6 après enlèvement des moyens profilés de guidage.

**Patentansprüche**

1. Verfahren zur Herstellung eines Stators einer dynamoelektrischen Maschine, wobei der Stator einen Magnetkern (1) aufweist, der wenigstens teilweise durch einen Plastiküberzug (2) isoliert ist und eine bestimmte Anzahl von Polschuhen (3) aufweist, in denen Aussparungen angebracht sind, um die Statorwicklungen (4) in Zusammenwirkung mit Haltelappen (5) zu sichern, welche diese Aussparungen axial verlängern, dadurch gekennzeichnet, daß die folgenden Schritte ausgeführt werden:

a) mit dem Plastiküberzug werden Führungsprofilteile (6) angeformt, welche die Lappen (5) axial verlängern und so angeordnet sind, daß der von einer Wickelnadel (14) abgegebene Draht (15) zu den zur Aufnahme desselben bestimmten Aussparungen geführt wird, wobei die Profilteile mit den Lappen (5) über verjüngte Zonen (12) verbunden sind, die Sollbruchstellen bilden;

b) die Wicklung wird durchgeführt, und die Drahtenden werden festgelegt;

c) die Führungsprofilteile (6) werden durch Zerbrechen der verjüngten Zonen (12) entfernt.

2. Statorbauteil für eine dynamoelektrische Maschine zur Anwendung eines Herstellungsverfahrens nach Anspruch 1, mit einem Magnetkern (1), der wenigstens teilweise durch eine Plastikumhüllung (2) isoliert ist und eine bestimmte Anzahl von Polschuhen (3) aufweist, in denen Aussparungen zum Haltern der Statorwicklungen (4) in Zusammenwirkung mit Haltelappen (5) angebracht sind, welche diese Polschuhe axial verlängern, dadurch gekennzeichnet, daß die Lappen axial an dem Bauteil durch Profilteile (6) verlängert sind, die einteilig mit ihnen ausgebildet sind und die Führung des Drahtes (15) der Wicklungen (4) während des Wickelvorganges desselben bewirken, wobei diese Führungsmittel mit den Lappen (5) über verjüngte Zonen (12) verbunden sind, die Sollbruchzonen bilden.

3. Bauteil nach Anspruch 2, dadurch gekennzeichnet, daß die Führungsmittel (6) des Drahtes (15) der Wicklungen (4) Führungsvorsprünge umfassen, die zur Außenseite des Stators hin verjüngt sind.

4. Bauteil nach Anspruch 3, dadurch gekennzeichnet, daß die Führungsvorsprünge (6) ausgehöhlt sind und jeweils mehrere Trennwände (7, 8) aufweisen, die nach außen konvergieren und deren Ränder angenähert die Erzeugenden eines idealen Kegels bilden, der den Vorsprung (6) umhüllt.

5. Bauteil nach Anspruch 3 oder 4, dadurch gekennzeichnet, daß die Haltelappen (5) in der Nähe ihrer Verbindung mit den Führungsvorsprüngen (6) Ränder (13) aufweisen, die sich radial erstrecken, um zur Halterung der Wicklungen (4) beizutragen.

6. Bauteil nach Anspruch 5, dadurch gekennzeichnet, daß die Ränder (13) der Lappen (5) im wesentlichen in Ebenen liegen, die senkrecht zur Rotationsachse der Maschine sind.

7. Stator einer dynamoelektrischen Maschine, der ausgehend von einem Bauteil nach einem der Ansprüche 2 bis 6 nach Entfernung der Führungsprofilteile gewonnen wird.

**Claims**

1. A method of manufacture of a stator for a dynamoelectric machine, said stator comprising a magnetic armature (1) at least partly insulated by a plastic covering (2) and provided with a predetermined number of pole pieces (3) having recesses adapted to retain stator windings (4) and to cooperate with retaining tongues (5) forming axial extensions of said pole pieces, wherein said method consists in carrying out the following operations;

a) the plastic covering is molded in one piece with shaped guiding means (6) forming axial extensions of the tongues (5) and so arranged as to guide the wire (15) which passes out of a winding needle (14) towards the recesses provided for receiving said wire, said shaped means being joined to the tongues (5) by means of reduced thickness portions (12) forming zones of preferential failure;

b) the winding operation is performed and the ends of the wire are stationarily secured;

c) the shaped guiding means (6) are removed by breaking-off the portions of reduced thickness (12).

2. A stator winding frame for a dynamoelectric machine for applying a method of manufacture according to claim 1, comprising a magnetic armature (1) at least partly insulated by means of a plastic covering (2) and provided with a predetermined number of pole pieces (3) forming recesses for retaining stator windings (4) and adapted to cooperate with retaining tongues (5) forming axial extensions of said pole pieces, wherein the tongues are extended axially on the winding frame by shaped means (6) forming one piece with said tongues for guiding the wire (15) of the windings (4) during the wire-winding operation, said guiding means being joined to said tongues (5) by means of reduced thickness portions (12) forming zones of preferential failure.

3. A winding frame according to claim 2, wherein said means (6) for guiding the wire (15) of the windings (4) comprise projecting guide-arms which are tapered outwards from the stator.

4. A winding frame according to claim 3, wherein said projecting guide-arms (6) have open portions and are each provided with a plurality of outwardly convergent partition elements (7, 8) having edges which constitute approximately the generating-lines of an ideal cone within which the projecting arm (6) is inscribed.

5. A winding frame according to any of claims 3 or 4, wherein the retaining tongues (5) are provided in the vicinity of the point of junction with the projecting guide-arms (6) with radially extending flanges (13) which serve to retain the windings (4).

6. A winding frame according to claim 5, wherein the flanges (13) of the tongues (5) are located substantially in planes at right angles to the axis of rotation of the machine.

7. A stator for a dynamoelectric machine produced from a winding frame according to any of claims 2 to 6 after removal of the shaped guiding means.

**FIG_1**

**FIG_6**

**FIG_2**

FIG_3

FIG_4

FIG_5

FIG_7